# EUROPEAN PATENT APPLICATION

(11) **EP 2 191 930 A2**
(43) Date of publication of application: **02.06.2010**
(21) Application number: 09176677.4
(22) Date of filing: 20.11.2009
(51) Int. Cl.: B23P 6/00, C23C 4/02, F01D 5/00

(54) **Repair Method For TBC Coated Turbine Components**

(30) Priority: 26.11.2008 US 324203
(71) Applicant: General Electric Company, Schenectady, NY 12345 (US)
(72) Inventor: Gupta, Bhupendra Kumar, Cincinnati, OH 45249 (US); Grady, Wayne Ray, Hamilton, OH 45013 (US); Garcia, Antoine Freitas, 25660-080, Petropolis-RJ (BR)
(74) Representative: Gray, Thomas

(57) **Abstract**

A method is provided for repairing a metallic turbine component which includes a thermal barrier coating system including a metallic bond coat (22) and a ceramic top coat (24). The method includes: (a) removing the top coat (24) using a mechanical process; (b) partially stripping the metallic bond coat (22) from the component, such that substantially no material of the component is removed; (c) repairing at least one defect in the turbine component; (d) applying a new metallic bond coat (26', 28') to the turbine component; and (e) applying a new ceramic top coat (24) over the metallic bond coat (26', 28').

## Description

### BACKGROUND OF THE INVENTION

This invention relates generally to the repair of gas turbine engine components and more particularly to the repair of turbine components incorporating ceramic thermal barrier coatings.

Gas turbine engines include a "hot section" comprising a combustor and one or more downstream turbines. Components in the hot section are exposed during operation to a high temperature, corrosive gas stream that limits their effective service life. Accordingly, these components are typically fabricated from high temperature cobalt or nickel-based "superalloys" and are often coated with corrosion and/or heat resistant materials, and in particular with ceramic thermal barrier coatings (TBCs).

Examples of such components include but are not limited to high pressure turbine blades and nozzles, and turbine blade shrouds. Despite the use of protective coatings, such components commonly develop defects such as cracks, damage, or material loss during service.

These components, after engine operation, are commonly repaired by brazing processes such as activated diffusion healing ("ADH"), or by welding processes such as superalloy welding at elevated temperature ("SWET"). In order to achieve a successful repair, the components should be clean and free of oxides at the interface of the defect.

One conventional process used to repair TBC coated components with service cracks is to completely strip the TBC coatings, including the ceramic top coat, and the metallic bond coat by a combination of grit blasting and chemical stripping. These two processes have a number of negative aspects, including low labor cost productivity, process variance and rework because of the manual nature of the processes, and component wall loss during chemical stripping which results in a high scrap rate.

### BRIEF SUMMARY OF THE INVENTION

These and other shortcomings of the prior art are addressed by the present invention, which provides a method for repairing a coated turbine component while preserving the material thickness of the component.

According to an aspect of the invention, a method is provided for repairing a metallic turbine component which includes a thermal barrier coating system including a metallic bond coat and a ceramic top coat. The method includes: (a) removing the top coat using a mechanical process; (b) partially stripping the metallic bond coat from the component, such that substantially no material of the component is removed; (c) repairing at least one defect in the turbine component; (d) applying a new metallic bond coat to the turbine component; and (e) applying a new ceramic top coat over the metallic bond coat.

According to another aspect of the invention, a repaired metallic turbine component includes: (a) a metallic body; (b) a bond coat applied to the body, comprising: (i) a first metallic layer of a nickel-based alloy; and (ii) a second metallic layer of a nickel-based alloy overlying the first layer; and (c) a ceramic top coat overlying the bond coat.

### BRIEF DESCRIPTION OF THE DRAWINGS

There follows a detailed description of embodiments of the invention by way of example only with reference to the accompanying drawings, in which:
Figure 1 is a perspective view of an service-run turbine nozzle having one or more defects therein;
Figure 2 is an enlarged cross-sectional view of a portion of a vane of the turbine nozzle of Figure 1, showing a defect therein;
Figure 3 is a view of the vane of Figure 2 after removal of a TBC top coat;
Figure 4 is a view of the vane of Figure 3 after partial stripping of a TBC bond coat;
Figure 5 is a view of the vane of Figure 4 after a crack repair;
Figure 6 is a view of the vane of Figure 5 after a bond coat application;
Figure 7 is a view of the vane of Figure 6 after reapplication of an aluminide coating; and
Figure 8 is a view of the vane of Figure 7 after application of a new TBC top coat.

### DETAILED DESCRIPTION OF THE INVENTION

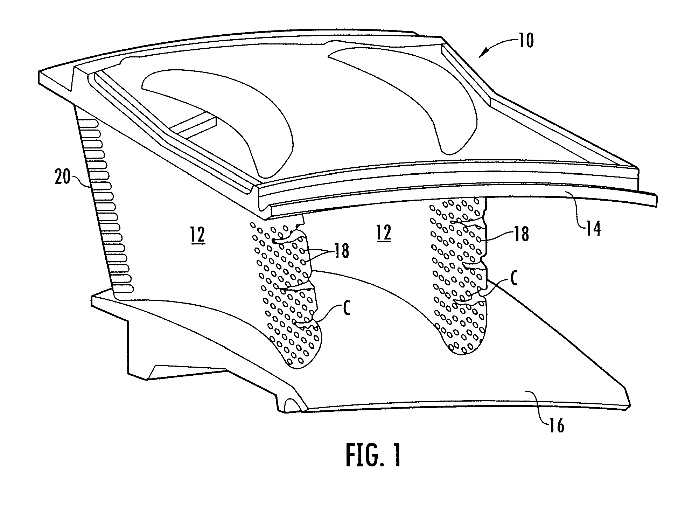

Referring to the drawings wherein identical reference numerals denote the same elements throughout the various views, Figure 1 illustrates an exemplary turbine nozzle segment 10. A gas turbine engine will include a plurality of such segments 10 arranged in an annular array. The turbine nozzle segment 10 is merely an example of a coated metallic turbine component, and the repair methods described herein are equally applicable to other components, nonlimiting examples of which include combustor liners, rotating turbine blades, and turbine shrouds.

The turbine nozzle 10 includes first and second nozzle vanes 12 disposed between an arcuate outer band 14 and an arcuate inner band 16. The vanes 12 define airfoils configured so as to optimally direct the combustion gases to a turbine rotor (not shown) located downstream thereof. The outer and inner bands 14 and 16 define the outer and inner radial boundaries, respectively, of the gas flow through the nozzle segment 10. The interior of the vanes 12 are mostly hollow and may include a number of internal cooling features of a known type, such as walls defining serpentine passages, ribs, turbulence promoters ("turbulators"), etc. The vanes 12 can have a plurality of conventional cooling holes 18 and trailing edge slots 20 formed therein. The presence of at least a specified minimum amount of material (i.e. minimum wall thickness) in the vanes 12 and the bands 14 and 16 is important to maintaining the structural integrity and aerodynamic performance of the turbine nozzle segment 10.

Such nozzle segments 10 and other hot section components commonly cast in one or more sections from a cobalt or nickel-based superalloy which has acceptable strength at the elevated temperatures of operation in a gas turbine engine (e.g. RENE 80, RENE 142, RENE N4, RENE N5, RENE N6).

RENE N5 is one particularly commonly used alloy and has a nominal composition in weight percent of about 7.5 percent cobalt, about 7.0 percent chromium, about 1.5 percent molybdenum, about 5 percent tungsten, about 3 percent rhenium, about 6.5 percent tantalum, about 6.2 percent aluminum, about 0.15 percent hafnium, about 0.05 percent carbon, about 0.004 percent boron, about 0.01 percent yttrium, balance nickel and minor elements.

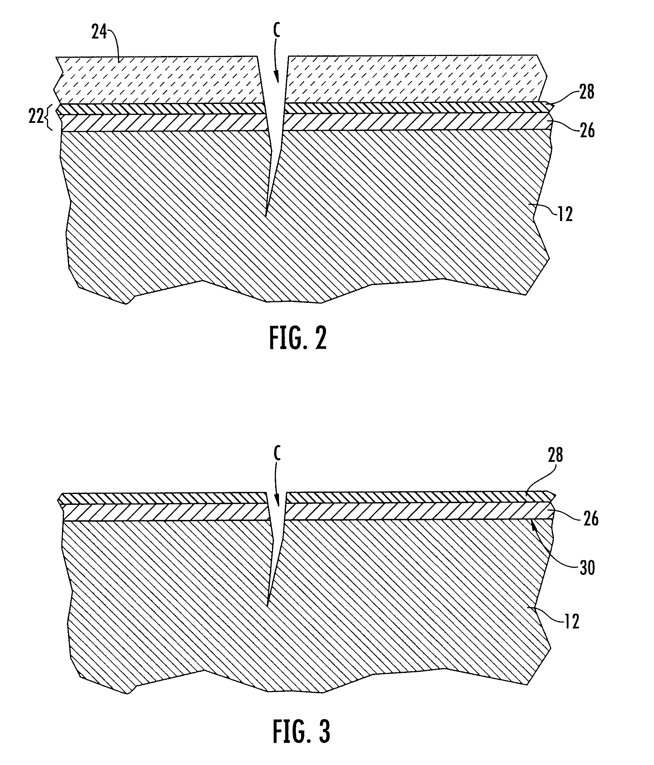

The turbine nozzle segment 10 is coated with a TBC coating system of a known type. Figure 2 shows a portion of one of the vanes 12. The coating system comprises a bond coat 22 and a top coat 24 of a ceramic material. The thicknesses of the various layers of the TBC coating are exaggerated for illustrative clarity.

Examples of metallic TBC bond coats in wide use include alloys such as MCrAlX overlay coatings (where M is iron, cobalt and/or nickel, and X is yttrium or a rare earth element), and diffusion coatings that contain aluminum intermetallics, predominantly beta-phase nickel aluminide and platinum-modified nickel aluminides (PtAl).

An example of an MCrAlX coating is commercially known as BC52 and has a nominal composition of, by weight, about 18% chromium, 10% cobalt, 6.5% aluminum, 2% rhenium, 6% tantalum, 0.5% hafnium, 0.3% yttrium, 1% silicon, 0.015% zirconium, 0.06% carbon and 0.015% boron, the balance nickel. BC52 and other bond coats may be applied by processes such as physical vapor deposition (PVD), particularly electron beam physical vapor deposition (EBPVD), and thermal spraying, particularly plasma spraying (air, low pressure (vacuum), or inert gas) and high velocity oxy-fuel spraying (HVOF).

The outer portion of the bond coat 22 is overcoated by an aluminiding process to increase the Al content for improved environmental resistance while retaining appropriate surface roughness as an anchor for the top coat 24 and sealing porosity in the bond coat 22. The complete bond coat 22 thus comprises a metallic layer 26 and an aluminide layer 28. Various aluminiding processes are known, for example pack cementation, vapor atmosphere, local powder application, etc.

The ceramic top coat 24 may comprise any suitable ceramic material alone or in combination with other materials. For example, it may comprise fully or partially stabilized yttria-stabilized zirconia and the like, as well as other low conductivity oxide coating materials known in the art. One suitable method for deposition is by electron beam physical vapor deposition (EB-PVD), although plasma spray deposition processes, such as air plasma spray (APS), also may be employed.

During engine operation, the vanes 12 can experience damage such as might result from local gas stream over-temperature or foreign objects impacting thereon. By way of example, the vanes 12 are shown in Figures 1 and 2 as having defects such as cracks "C". As seen in Figure 2, the cracks penetrate the TBC top coat 24, the bond coat 22, and the wall of the vane 12.

Using the vane 12 as a working example, TBC coated components may be repaired as follows, with reference to Figures 3-7. First, the top coat 24 is removed using a mechanical stripping method such as grit blasting. The mechanical stripping process parameters are selected so as to remove the top coat 24 and potentially part of the bond coat 22, but not to penetrate through to any base material of the vane 12. An example of a suitable stripping process is a light grit blast using about 138 kPa (20 psi) to about 414 kPa (60 psi) air pressure, with 120-240 grit aluminum oxide particles. The results are shown in Figure 3.

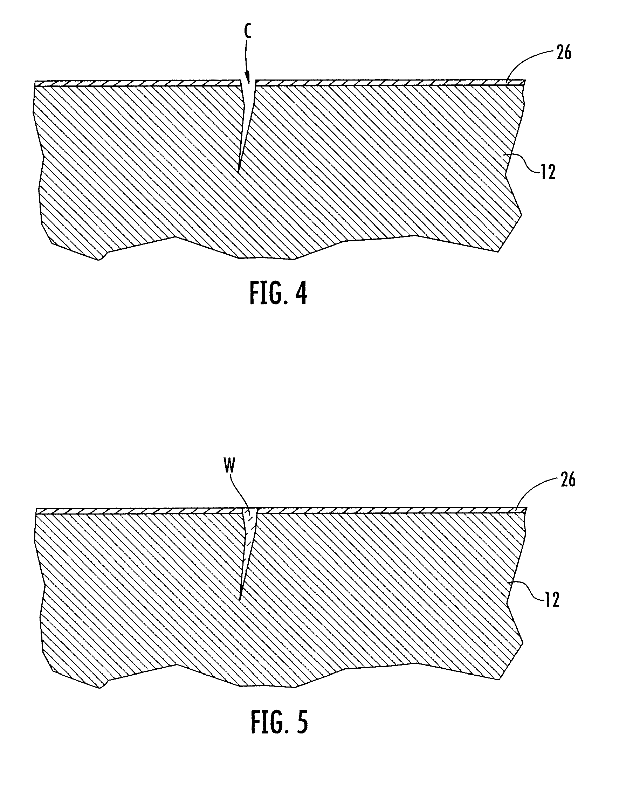

Next, the bond coat 22 is cleaned through a known fluoride ion cleaning (FIC) process, which is a high temperature gas-phase treatment of the nozzle segment 10 using hydrogen fluoride and hydrogen gas. The FIC process parameters are selected so as to remove the aluminide layer 28 of the bond coat 22, but not to penetrate through the metallic layer 26 to the surface 30 of the vane 12. An example of a suitable FIC process may consist of heating parts to a working temperature of about 1038⁰ C (1900⁰ F) to about 1093⁰ C (2000⁰ F), in a gas atmosphere of about 2-9% hydrogen fluoride/hydrogen with a soak time of about 2-8 hours at the working temperature. In other words, the FIC process is biased to leave some of the bond coat 22 remaining. This ensures that substantially no base metal attack occurs. In contrast, prior art stripping processes have focused on complete removal of the bond coat 22, which inevitably leads to wall thickness loss in the vane 12. Figure 4 shows the vane 12 after the FIC process A minimum amount of bond coat 22, for example, about 0.03 mm (0.001 in.) bond coat thickness should be left intact on the part surface after the FIC process. Preferably about half the initial bond coat thickness is left intact.

Next, crack repairs are made where necessary using conventional braze or welding processes, such as the above-noted ADH or SWET processes. Figure 5 shows a braze deposit "W" filling the crack C in the vane 12. Contrary to conventional expectations, is has been found that satisfactory braze and weld repairs may be made even when part of the bond coat 22 is still in place. This unique result is achieved by using the FIC process which removes aluminum from the bond coat 22.

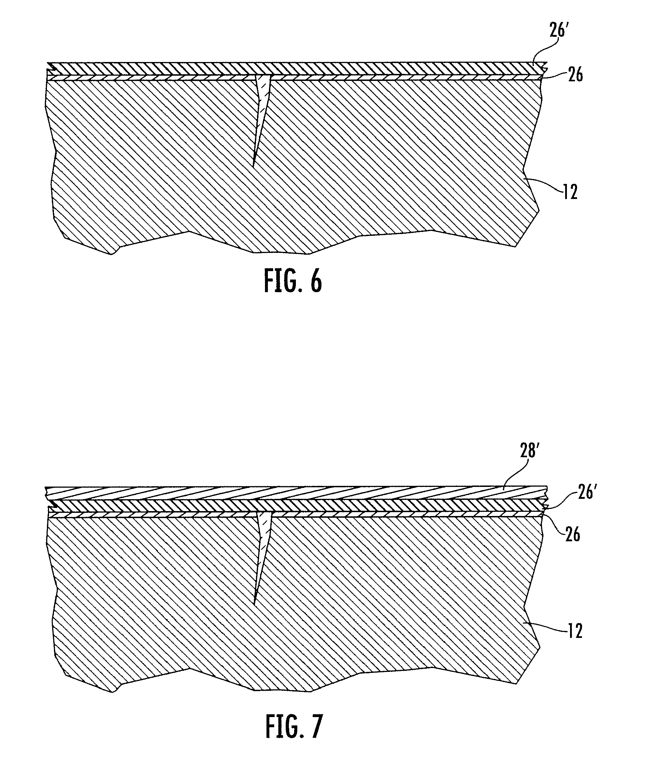

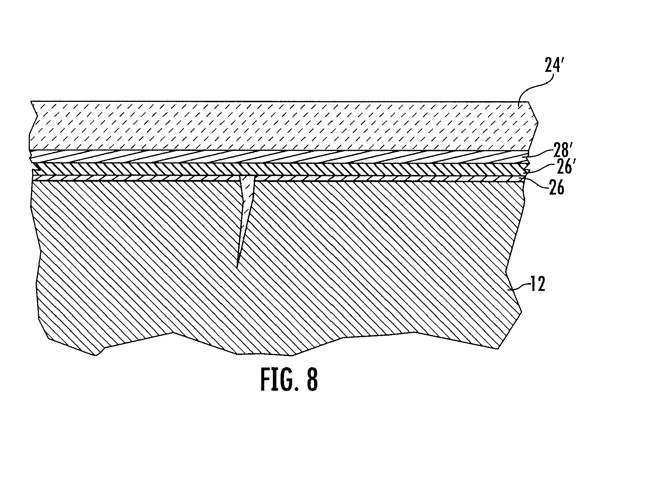

Once repairs are complete, the TBC system can be reapplied. First, a metallic flash coat is applied. For example, a layer 26' of the above-mentioned BC52 material about 0.08 mm (3 mils) to about 0.13 mm (5 mils) in thickness may be applied (see Figure 6). Next, an aluminide coating 28' is reapplied, as shown in Figure 7. Finally, a ceramic TBC top coat 24' is applied, as seen in Figure 8. The completed vane 12 is then ready for return to service.

Furnace cycle tests at high temperature, e.g. 1093⁰ C (2000⁰F), of components repaired by the process described above have shown that the replaced TBC coating system is satisfactory for return to service in gas turbine engines. In fact, testing indicates that the repaired TBC system may survive more cycles at high temperature than an OEM TBC coating system.

The foregoing has described a method for repairing gas turbine engine coated hot section components. While specific embodiments of the present invention have been described, it will be apparent to those skilled in the art that various modifications thereto can be made without departing from the scope of the invention. Accordingly, the foregoing description of the preferred embodiment of the invention and the best mode for practicing the invention are provided for the purpose of illustration only and not for the purpose of limitation.

## Claims

1. A method for repairing a metallic turbine component (12) which includes a thermal barrier coating system including a metallic bond coat (22) and a ceramic top coat (24), the method comprising:
(a) removing the top coat (24) using a mechanical process;
(b) partially stripping the metallic bond coat (22) from the component, such that substantially no material of the component is removed;
(c) repairing at least one defect in the turbine component (12);
(d) applying a new metallic bond coat (26', 28') to the turbine component (12); and
(e) applying a new ceramic top coat (24') over the metallic bond coat (22).

2. The method of claim 1 wherein the top coat (24) is removed by grit blasting.

3. The method of claim 1 or 2, wherein the bond coat (22) is partially removed by fluoride ion cleaning.

4. The method of any of the preceding claims, wherein the new metallic bond coat (26', 28') comprises a metallic layer (26') and an overlying aluminide layer (28').

5. The method of claim 4, wherein the metallic layer (26') is applied to a thickness of about 3 mils to about 5 mils.

6. The method of claim 4 or 5, wherein the metallic layer (26') is an MCrAlX coating, wherein M is selected from the group consisting ofNi, Fe, Co and combinations thereof, and X is yttrium or a rare earth element.

7. The method of claim 6 wherein the metallic layer (26') consists essentially of, by weight, about 18% chromium, 10% cobalt, 6.5% aluminum, 2% rhenium, 6% tantalum, 0.5% hafnium, 0.3% yttrium, 1% silicon, 0.015% zirconium, 0.06% carbon and 0.015% boron, the balance nickel.

8. The method of any of the preceding claims, wherein the metallic turbine component (12) is formed from a nickel-based superalloy.

9. The method of any of the preceding claims, wherein the at least one defect is repaired by brazing or welding.

10. A repaired metallic turbine component (12), comprising:
(a) a metallic body;
(b) a bond coat applied to the body, comprising:
(i) a first metallic layer (26) of a nickel-based alloy; and
(ii) a second metallic layer (26') of a nickel-based alloy overlying the first layer; and
(c) a ceramic top coat (24') overlying the bond coat.

11. The repaired metallic turbine component (12) of claim 10 wherein the bond coat further comprises an aluminide layer (28') disposed overlying the first and second layers.

12. The metallic turbine component (12) of claim 10 or 11 wherein the second metallic layer (26') is about 3 mils to about 5 mils thick.
